(19) Europäisches Patentamt / European Patent Office / Office européen des brevets

(11) **EP 2 009 891 B1**

(12) **FASCICULE DE BREVET EUROPEEN**

(45) Date de publication et mention
de la délivrance du brevet:
**16.01.2019 Bulletin 2019/03**

(51) Int Cl.:
**H04M 3/56** *(2006.01)*    *H04L 29/06 (2006.01)*

(21) Numéro de dépôt: **08158735.4**

(22) Date de dépôt: **23.06.2008**

(54) **Transmission de signal audio dans un système de conférence audio immersive**

Übertragung eines Audiosignals in einem immersiven Audiokonferenzsystem

Transmission of an audio signal in an immersive audio conference system

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **26.06.2007 FR 0756017**

(43) Date de publication de la demande:
**31.12.2008 Bulletin 2009/01**

(73) Titulaire: **Orange
75015 Paris (FR)**

(72) Inventeurs:
• **Pallone, Grégory
 22660, TRELEVERN (FR)**
• **Thomas, Jean-Philippe
 22660, TREVOU TREGUIGNEC (FR)**

(56) Documents cités:
**WO-A-97/33450      US-A1- 2003 081 115
US-B1- 6 850 496**

## Description

La présente invention se rapporte à un procédé de transmission de signaux audio dans un système de conférence audio immersive. Plus particulièrement, la présente invention se rapporte à un système de conférence audio immersive comportant une pluralité de stations de conférence et un pont de conférence mettant en oeuvre le procédé selon l'invention.

Dans les systèmes de conférences audio classiques, il existe des systèmes d'écoute monophonique où il est difficile de distinguer les différents locuteurs de la conférence et de les localiser. D'autres systèmes de conférence audio point à point transmettent les signaux audio réels capturés par des microphones binauraux positionnés sur une tête de mannequin. Ces microphones permettent de capturer distinctement les sons provenant de différents locuteurs d'une salle de conférence. L'emplacement de ces microphones simule l'emplacement des oreilles gauche et droite d'un individu fictif. La différence entre les sons capturés par ces deux microphones permet d'obtenir des informations de localisation des locuteurs de la salle. Un tel système de conférence est par exemple décrit dans le brevet US 7 012 630.

Les signaux audio ainsi obtenus sont transmis après numérisation et si nécessaire compression à une autre station de conférence qui les retransmet à une paire de haut-parleurs ou à une pluralité de casques que chacun des intervenants peut avoir.

La prise de son naturelle a l'avantage d'un confort d'écoute agréable et d'un réalisme important.

D'autres systèmes de conférence audio prévoient un pont de conférence encore appelé MCU (de l'anglais "Multi-point Control Unit") qui permet de créer des scènes artificielles de conférence afin que l'utilisateur d'une salle de conférence virtuelle ait l'impression d'avoir tous ses interlocuteurs dans une même salle et à des positions différentes.

Pour créer cette scène artificielle, on utilise des filtres HRTF (de l'anglais "Head Related Transfer Function") pour simuler une position dans l'espace d'un locuteur. Ceci est décrit par exemple dans la demande US20050018039 où un filtre HRTF est défini pour chaque locuteur du système de conférence. Le pont de conférence applique un filtre HRTF respectif pour l'oreille gauche et pour l'oreille droite à un signal monophonique provenant d'un locuteur. Un signal bicanal au format binaural est ainsi obtenu par locuteur.

L'intervention d'un utilisateur pour proposer des positions déterminées des locuteurs dans l'espace est souvent nécessaire.

Dans le cas du brevet US 7012630, cette création de scène artificielle n'est possible que dans le cas où un seul locuteur est présent par salle de conférence. Un signal monophonique est ainsi transmis par site de conférence pour ensuite créer au sein du MCU une scène artificielle représentant les différents locuteurs des différents sites et qui est transmise alors aux différents sites.

Ces scènes artificielles ainsi crées, même si elles permettent de bénéficier d'une écoute spatialisée n'est cependant pas aussi réaliste qu'une scène naturelle telle qu'elle peut être captée dans la réalité par une prise de son binaurale.

Le document US 6 850 496 décrit un autre exemple de l'art antérieure.

Les méthodes de l'état de l'art ne prévoient pas la possibilité d'avoir une écoute spatialisée naturelle (ou immersive) d'une conférence audio multi-sites et multi-utilisateurs. Les ponts de conférence spatialisée existants dans l'état de l'art ne permettent pas non plus d'étendre au cours du temps le nombre d'intervenants ou le nombre de sites dans le système de conférence audio.

De plus, les méthodes proposées ne permettent pas à la fois de localiser l'intervenant lors de l'écoute et de connaître l'appartenance de l'intervenant à un site de conférence.

La présente invention vient améliorer la situation.

A cet effet l'invention propose un procédé selon la revendication indépendante 1 et les revendications dépendantes 2-6.

La présente invention se rapporte également à un pont de conférence selon la revendication indépendante 6 et la revendication dépendante 8.

L'invention vise enfin un programme d'ordinateur selon la revendication indépendante 9.

D'autres caractéristiques et avantages de l'invention apparaîtront plus clairement à la lecture de la description suivante, donnée uniquement à titre d'exemple non limitatif, et faite en référence aux dessins annexés, sur lesquels:

- la figure 1 illustre un système de conférence audio selon l'invention;
- la figure 2 représente un schéma bloc d'une station de conférence selon l'invention;
- la figure 3 représente un schéma bloc d'un pont de conférence selon l'invention; et
- la figure 4 représente sous forme d'organigramme, les principales étapes d'un procédé de transmission d'une scène spatialisée selon l'invention.

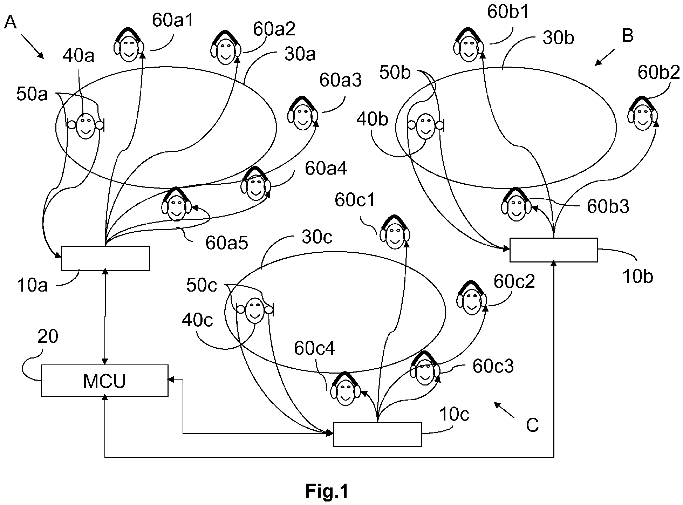

La **figure 1** représente un exemple de système de conférence audio selon l'invention. Ce système montre trois stations de conférence 10a, 10b et 10c pour trois salles ou sites de conférences respectives, A, B et C.

Dans une salle de conférence, par exemple A, une tête de mannequin 40a est munie d'une paire de microphones binauraux 50a. Ces microphones sont positionnés sur le mannequin à l'emplacement de l'oreille gauche et de l'oreille droite d'un individu fictif.

Dans un mode de réalisation possible, les microphones sont omnidirectionnels. Ils permettent ainsi de capturer les sons provenant de toutes les directions pour un rendu plus naturel.

Ces microphones sont par exemple de type électrostatique afin d'obtenir de bons résultats sonores. Ce type de microphones nécessitant une alimentation, peuvent avantageusement être alimentés par une méthode d'alimentation fantôme à partir d'un préamplificateur placé dans la station de conférence.

La table de conférence est illustrée en 30a. Autour de cette table, cinq locuteurs sont positionnés, munis chacun d'un casque d'écoute 60a1, 60a2,...,60a5.

De manière avantageuse, les casques sont des casques de type "ouvert" qui permettent d'entendre les sons en local. Il est cependant plus judicieux de prévoir en plus un retour en local de l'ambiance captée par les microphones du site. Ainsi, le fait de renforcer le son des participants de la conférence locale, permet une discussion naturelle entre les participants d'un même site. Afin d'éviter une trop forte latence du retour local, il est préférable que celui-ci soit prévu dans la station de conférence locale plutôt que dans le pont de conférence. Ces casques peuvent être des casques sans-fil pour faciliter les mouvements des locuteurs.

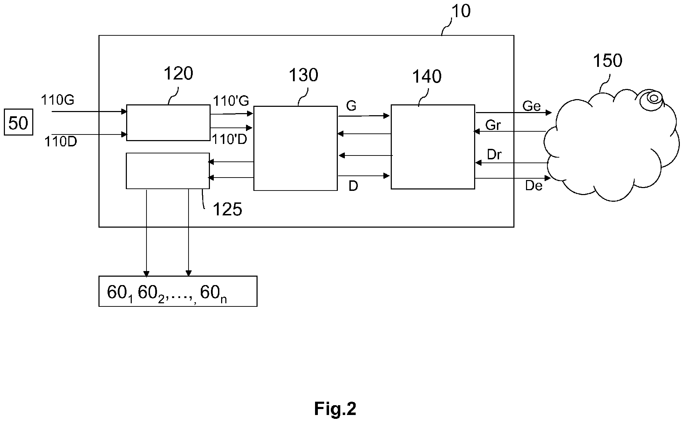

La station de conférence est chargée de recevoir les sons reçus des microphones binauraux de les traiter si nécessaire et de les transmettre au pont de conférence. En retour, il reçoit les signaux d'une scène audio spatialisée du pont de conférence 20 et transmet ces signaux aux différents locuteurs de la salle, via leur casque respectif. Cette station de conférence est décrite ultérieurement en référence à la figure 2.

Les autres salles de conférence B et C sont équipées de même façon pour trois personnes munies de casque (60bl, 60b2, 60b3) dans la salle B et quatre personnes munies de casque (60c1, 60c2, 60c3, 60c4) dans la salle C.

Dans une variante de réalisation, les casques peuvent être remplacés par des mini haut-parleurs situés à proximité de chaque personne (sur un dossier de chaise par exemple) ou encore par une seule paire de haut-parleurs située à proximité de la tête de mannequin par exemple.

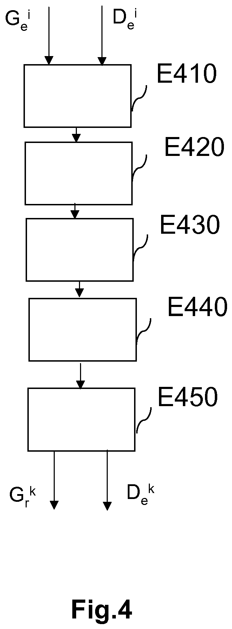

Un pont de conférence 20 qui peut être situé soit dans un réseau de communication, soit dans une station de conférence du système de conférence, reçoit les différents signaux des stations de conférence du système de conférence. Ce pont de conférence met en oeuvre les étapes du procédé de l'invention décrit en référence à la figure 4. La scène audio spatialisée issue de cette mise en oeuvre du procédé est ensuite transmise du pont de conférence aux différentes stations de conférence.

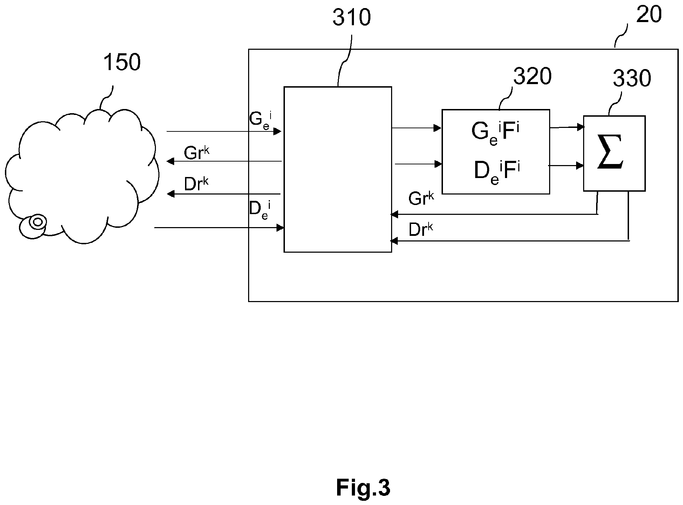

La configuration d'un pont de conférence est décrite ultérieurement en référence à la figure 3.

L'architecture d'une station de conférence est maintenant décrite en référence à la figure 2.

Une station de conférence 10a, 10b ou 10c reçoit en entrée 110G et 110D, les signaux provenant des deux microphones 50 (a,b ou c selon la station concernée). Elle comporte un préamplificateur 120 apte à augmenter le niveau des signaux reçus tout en garantissant un bon rapport signal à bruit. Les signaux 110'G et 110'D en sortie du préamplificateur entrent dans un module de conversion Analogique/Numérique bicanal de façon à convertir les deux signaux sons en signaux audio numériques G et D. Ce convertisseur doit être apte à conserver le plus fidèlement possible, la majeure partie de l'information audible. Une fréquence d'échantillonnage adaptée doit donc être choisie. Les fréquences d'échantillonnage de 32 kHz, 44.1kHz ou encore 48kHz donnent par exemple de bons résultats. Ce module de conversion peut posséder deux convertisseurs de façon à convertir les signaux droite et gauche parallèlement. Un module possédant un seul convertisseur cadencé en conséquence peut également être prévu. Dans ce cas, les signaux numériques gauche G et droite D seront déphasés d'une demi période d'échantillonnage, ce qui pourra amener une légère dégradation de la spatialisation.

Un module de communication 140 connecté à un réseau de communication 150 (de type IP ou ISDN par exemple) échange les signaux numériques G et D en émission et réception. Ce module peut effectuer de façon optionnelle une compression sur ces signaux numériques en fonction par exemple de la bande passante disponible sur le réseau de communication.

Dans un mode de réalisation sans pertes, on peut utiliser un codeur bicanal ou deux codeurs monocanal en parallèle et utiliser directement les signaux PCM (de l'anglais "Pulse Code Modulation), c'est-à-dire les signaux échantillonnés et quantifiés issus des convertisseurs du module 130.

Dans un autre mode de réalisation, un codeur perceptuel avec perte d'information (mais quasiment sans perte audible) peut être utilisé pour diminuer le débit.

Ce module de communication est en communication avec le pont de conférence 20 du système de conférence auquel il envoie les données audio numérisées $G_e$ et $D_e$ d'émission.

En retour, après traitement par le pont de conférence 20, les signaux de la scène audio spatialisée hybride sont reçus par le module de communication 140. Ce module décompresse si nécessaire les signaux reçus avec un codec adapté et transforme les signaux reçus en signal bicanal avant de le transmettre au module de conversion 130. En sortie de la conversion Numérique/Analogique, le signal bicanal entre dans le module d'amplification 125 qui va dupliquer ce signal de façon à le fournir aux différents casques d'écoute connectés sur cette station de conférence.

La configuration des stations de conférence 10b et 10c de la figure 1 est la même que celle de la station 10a ainsi décrite.

En référence à la **figure 3**, l'architecture d'un pont de conférence 20 selon l'invention est maintenant décrite.

Ce pont de conférence comporte un module de communication 310 apte à recevoir les flux bicanaux d'émission $G_e$ et $D_e$ des différentes stations de conférence.

Ainsi, en référence à la figure 1, le module de communication du pont de conférence 20 reçoit le signal bicanal $G_e^1$ et $De^1$ de la station de conférence 10a, le signal bicanal $G_e^2$ et $D_e^2$ de la station de conférence 10b et le signal bicanal $G_e^3$ et $D_e^3$ de la station de conférence 10c.

De manière générale, le module de communication reçoit les signaux bicanaux $G_e^i$ et $D_e^i$ pour i allant de 1 à N, N étant le nombre de stations de conférence du système de conférence.

Dans le cas où ces signaux d'émission ont été compressés, le module de communication 310 effectue une décompression adaptée de ces signaux.

Un module de traitement 320 reçoit en entrée les signaux $G_e^i$ et $D_e^i$. Ce module 320 est adapté à déterminer au moins une fonction de traitement $F^i$ par site de conférence. Ainsi en référence à la figure 1, une fonction de traitement $F^1$ est déterminée pour le site A, une fonction $F^2$ est définie pour le site B et une fonction $F^3$ est définie pour le site C.

Le module 320 applique la fonction $F^i$ respective au signal bicanal issu du site de conférence correspondant.

Dans un mode préféré de réalisation, cette fonction de pondération $F^i$ est appliquée de façon identique à la fois au signal droit et au signal gauche du signal bicanal du site i correspondant.

Dans un mode particulier de réalisation, il est possible d'appliquer une fonction différente au signal droit et au signal gauche. Des exemples de ce mode de réalisation seront développés ultérieurement.

Un module de constitution d'une scène spatiale hybride 330 est adapté à constituer le signal de réception bicanal hybride $G_r^i$ et $D_r^i$ pour chacune des stations de conférence.

Ainsi, pour constituer le signal bicanal de la station de conférence A par exemple, le module 330 somme les signaux traités des sites B et C pour former la scène hybride spatiale.

Ainsi, de façon générale, on obtient pour la station k des signaux de réception $G_r^k$ et $D_r^k$ selon les équations suivantes:

$$G_r^k = \sum_{i \neq k} (F^i . G_e^i)$$

$$D_r^k = \sum_{i \neq k} (F^i . D_e^i)$$

On superpose ainsi des scènes sonores naturelles distantes pour créer une scène spatiale hybride.

La superposition des ambiances permet donc à la fois de localiser le locuteur de la conférence même à distance et de déterminer son appartenance à un site de conférence.

Ainsi, même si deux locuteurs distants peuvent se retrouver à la même position spatiale dans la scène spatiale hybride, les salles de conférence sont généralement différentes et apportent donc une "couleur" (une réponse en fréquence particulière) différente qui agit comme un filtre sur la voix du locuteur. Ceci permet donc de différencier un locuteur d'un site A, d'un locuteur d'un site B par exemple.

Les signaux numériques de réception $G_r^i$ et $D_r^i$ sont ensuite optionnellement codés avant d'être transmis.

La fonction $F^i$ peut dans un premier mode de réalisation être un simple gain. Un gain adapté aux différents sites peut ainsi permettre d'égaliser les niveaux des différents sites.

Dans le cas par exemple où les salles de conférence des différents sites ont de très fortes disparités entre elles (taille différente, réverbérations différentes), l'égalisation des niveaux entre les signaux provenant de ces sites est important.

Ce gain est appliqué de façon symétrique sur les signaux droits et sur les signaux gauches avant sommation afin de conserver l'équilibre droite/gauche de la scène naturelle et la précision des effets de spatialisation.

Dans ce mode de réalisation, le traitement s'écrit

$$G_r^k(n) = \sum_{i \neq k} (F^i . G_e^i(n))$$

$$D_r^k(n) = \sum_{i \neq k} (F^i . D_e^i(n))$$

avec n l'indice temporel, et F$^i$ un scalaire.

L'application d'un gain peut également permettre de gérer les saturations éventuelles sans pour autant perturber les effets de spatialisation. Dans le cas par exemple où de nombreux sites sont connectés, il peut y avoir saturation. Afin d'éviter cela, il peut être intéressant de normaliser le résultat de la somme et d'appliquer ainsi une atténuation à certains des signaux. Cette atténuation doit également être appliquée de la même façon sur les signaux gauches que sur les signaux droits de manière à garder les effets de la spatialisation.

Dans un second mode de réalisation, la fonction F$^i$ est un filtre. Une détermination d'un filtre par site peut permettre d'accentuer la "coloration" d'un site par rapport à un autre dans la scène spatiale hybride. Par exemple, il peut être intéressant de rendre moins réalistes les scènes sonores distantes par rapport aux sources sonores locales en appliquant un filtre, ou encore de compenser une coloration naturelle trop prononcée de la salle.

Dans ce mode de réalisation, le traitement s'écrit

$$G_r^k(n) = \sum_{i \neq k} (F^i * G_e^i)(n)$$

$$D_r^k(n) = \sum_{i \neq k} (F^i * D_e^i)(n)$$

avec n l'indice temporel, F$^i$ un filtre, et * le produit de convolution.

La fonction F$^i$ dans un troisième mode de réalisation peut être une fonction non-linéaire. Une fonction non-linéaire comme un compresseur de dynamique peut être envisagé. Ceci permet de diminuer l'écart de niveau perçu entre des signaux situés au dessus d'un certain seuil.

Dans ce mode de réalisation, le traitement s'écrit

$$G_r^k(n) = \sum_{i \neq k} (F^i(n). G_e^i(n))$$

$$D_r^k(n) = \sum_{i \neq k} (F^i(n). D_e^i(n))$$

avec n l'indice temporel, et F$^i$(n) un gain variant dans le temps, déterminé par exemple de la manière suivante:

$$F^i(n) = 1 \ \ \text{si} \ \ \varepsilon(n) < S$$

$$F^i(n) = R.(\varepsilon(n) - S) + S \ \ \text{si} \ \ \varepsilon(n) > S$$

Avec S le seuil énergétique au dessus duquel la compression se déclenche, R le ratio d'énergie de sortie sur l'énergie d'entrée désiré, et $\varepsilon(n)$ la puissance instantanée du signal donné par:

$$\varepsilon(n) = \sqrt{\frac{1}{N} \sum_{m=n-N+1}^{n} (G_e^i(m) + D_e^i(m))^2}$$

Où m est un indice temporel, et N la longueur de la fenêtre d'observation d'énergie.

Une autre fonction non-linéaire peut par exemple être l'application d'un réducteur de bruit ou bien d'un annuleur d'écho. Ceci peut ainsi permettre d'améliorer la qualité perçue.

Un annuleur d'écho acoustique permet de profiter d'une écoute mains-libres sur un terminal. Il supprime dans le signal microphonique envoyé vers le correspondant, le signal diffusé par le haut-parleur et filtré par l'environnement puis capté par le microphone, afin que le correspondant ne s'entende pas avec un retard (phénomène d'écho). Ce traitement est généralement basé sur l'utilisation d'un filtre adaptatif placé entre le signal envoyé vers le haut-parleur et le signal microphonique envoyé vers le correspondant.

Cet annuleur d'écho peut être mis en oeuvre par exemple dans le cas où un ou plusieurs haut-parleurs sont placés dans une salle de conférence au lieu de l'utilisation de casques par les auditeurs.

Un réducteur de bruit permet d'atténuer les bruits de l'environnement (bruit de fond) qui sont supposés être stationnaires. Ce traitement est généralement basé sur une estimation à long terme des caractéristiques du bruit, et un filtrage adapté à ces caractéristiques.

Un limiteur permet d'atténuer localement le gain d'un signal de niveau élevé afin que ce dernier ne soit pas écrêté. En effet, un signal écrêté génère des harmoniques désagréables à l'oreille. Ce traitement est généralement basé sur un suivi de niveau du signal, et une atténuation lorsque ce niveau dépasse un certain seuil.

Ces trois traitements sont connus de l'homme de l'art et ne seront donc pas plus détaillés ici.

Ces traitements sont des exemples concrets de traitements appliqués aux canaux gauche et droit selon l'invention.

Dans le cas d'un annuleur d'écho (respectivement d'un réducteur de bruit ou d'un limiteur), les composantes de signal à modifier provenant des micros Gauche et Droit ne sont généralement pas identiques. En effet, dans le cas d'une prise de son à microphones non coïncidents (les capsules ne sont pas placées au même point de l'espace) comme c'est le cas dans la prise de son binaurale, le son provenant du haut-parleur dans le cas de l'annuleur d'écho (respectivement le bruit à supprimer dans le cas du réducteur de bruit, le signal de niveau trop élevé dans le cas du limiteur) parvient au premier microphone avec un retard et/ou un niveau et/ou une modification de spectre différente du deuxième microphone.

Il s'ensuit que l'annulation d'écho (respectivement la réduction de bruit ou le limiteur) nécessite de traiter indépendamment les canaux gauche et droit afin d'optimiser le résultat. Ceci est possible dans le procédé selon l'invention en appliquant une fonction de traitement différente sur chacun des canaux.

Un traitement indépendant des canaux gauche et droit mène à des modifications de niveau, de phase et de spectres incohérents entre les signaux alimentant les oreilles gauche et droite de l'auditeur, ce qui induit une perception d'instabilité de la scène sonore.

Ainsi, pour respecter la stabilité de la scène sonore, il est préférable d'appliquer le même traitement (modifications de retard, de niveau, de spectre) aux canaux gauche et droite, mais dans ce cas, les paramètres de traitements tels que l'annulation d'écho (respectivement la réduction de bruit ou le limiteur) doivent être calculés sur le signal Gauche, ou Droit, ou un matriçage des deux (typiquement la somme Gauche+Droit), et ces paramètres doivent être appliqués de manière symétrique sur les canaux Gauche et Droit, ce qui mène à un traitement sous-optimal sur l'un au moins des deux canaux.

Pour une prise de son non coïncidente, il existe donc forcément un compromis entre une efficacité du traitement d'annulation d'écho (respectivement de réduction de bruit ou du limiteur) pour chacune des oreilles et une scène sonore stable.

D'autres fonctions de traitement de signal peuvent ainsi être appliquées de façon à améliorer la qualité des signaux ou encore à rendre un service quelconque.

Ce pont de conférence tel que décrit peut être indépendant des stations de conférence du système de conférence. Il peut dans un mode de réalisation particulier être intégré dans une station de conférence du système.

Le pont de conférence est par exemple un ordinateur, une station de travail ou encore un terminal de communication.

Dans un mode de réalisation particulier, il est possible d'ajouter à la liste des participants de la conférence, un locuteur ou un site avec une prise de son monophonique. Le traitement par le pont de conférence est alors à adapter de la façon suivante pour transmettre la scène audio bicanale aux participants:

$$G^k_{r-bicanal} = \sum_{i \neq k}(F^i . G^i_{e-bicanal)} + \sum_{i \neq k}(F^i X^i . M^i_{e-mono})$$

$$D^k_{r-bicanal} = \sum_{i \neq k}(F^i . D^i_{e-bicanal)} + \sum_{i \neq k}(F^i Y^i . M^i_{e-mono})$$

avec $X^i$ et $Y^i$ des fonctions linéaires ou non, variant ou cours du temps ou non et $M_{e-mono}$ le signal d'émission du microphone monophonique du participant isolé.

Si $X^i$ et $Y^i$ sont des simples gains, alors on ajoute à la scène spatiale hybride un participant supplémentaire grâce à une spatialisation d'intensité basée sur une différence d'intensité entre les signaux droit et gauche.

Si $X^i$ et $Y^i$ sont des filtres prenant en compte des retards et des intensités, alors on ajoute à la scène spatiale hybride, un participant supplémentaire grâce à une spatialisation amplitude/phase basée sur des différences de temps et d'intensité entre les signaux droit et gauche.

Si $X^i$ et $Y^i$ sont des filtres HRTF, alors on ajoute à la scène spatiale hybride un participant supplémentaire grâce à un système binaural.

Les signaux audio bicanaux reçus de ces stations de conférence sont alors des signaux audio bicanaux artificiels. Les participants de ces sites peuvent cependant profiter de la scène hybride spatiale issue du procédé selon l'invention, s'ils possèdent un casque ou au moins une paire de haut-parleurs.

Ainsi, en référence à la **figure 4**, le procédé de transmission d'une scène audio spatialisée selon l'invention est maintenant décrit. Ce procédé est mis en oeuvre par un pont de conférence du système de conférence selon l'invention.

Le procédé comporte une première étape E410 de réception des signaux bicanaux d'émission $G_e{}^i$ et $D_e{}^i$ provenant des différentes stations de conférence du système de conférence. Une étape E420 de détermination d'au moins une fonction $F^i$ de traitement par station de conférence est mise en oeuvre. A l'étape E430, les fonctions de traitement sont appliquées aux signaux bicanaux respectifs reçus.

L'étape E440 consiste ensuite à constituer un signal bicanal hybride par station de conférence. Cette étape s'effectue par sommation d'une partie des signaux audio bicanaux traités. Pour une station de conférence donnée, les signaux traités sommés sont ceux issus des N-1 autres stations de conférence, N étant le nombre de stations de conférence du système de conférence.

L'étape E450 de transmission aux différentes stations de conférence du système de conférence du signal bicanal hybride ainsi constitué est ensuite mise en oeuvre. Ces différentes étapes sont mises en oeuvre dans un pont de conférence tel que décrit en référence à la figure 3.

Selon l'invention, un programme d'ordinateur stocké est dans une mémoire du pont de conférence et/ou stocké sur un support mémoire destiné à coopérer avec un lecteur du pont de conférence et/ou téléchargé via un réseau de communication. Ce programme comporte des instructions de code pour la mise en oeuvre des étapes du procédé selon l'invention, lorsque ledit programme est exécuté par un processeur du pont de conférence.

**Revendications**

1. Procédé de transmission d'une scène audio spatialisée à partir d'un pont de conférence dans un système de conférence comportant une pluralité de stations de conférence, une station de conférence correspondant à un site où elle est localisée, dans lequel le procédé comporte les étapes suivantes mises en oeuvre par le pont de conférence:

   - réception (E410) de signaux audio bicanaux provenant des stations de conférence;
   - détermination (E420), par station de conférence du système de conférence, d'au moins une fonction de traitement adaptée à des caractéristiques du site de la station de conférence correspondante;
   - application (E430) des fonctions de traitement respectives aux signaux bicanaux reçus des stations de conférence, le même traitement étant appliqué à chacun des signaux d'un signal audio bicanal d'une station de conférence;
   - constitution (E440) d'un signal bicanal hybride à transmettre par station de conférence par sommation d'une partie des signaux audio bicanaux ainsi traités;
   - transmission (E450) aux différentes stations de conférence du système de conférence du signal audio bicanal hybride respectif.

2. Procédé selon la revendication 1, **caractérisé en ce que** les signaux audio bicanaux provenant des stations de conférence sont acquis par l'intermédiaire de microphones binauraux.

3. Procédé selon l'une des revendications 1 à 2, **caractérisé en ce que** les signaux audio bicanaux d'une partie des stations de conférence sont des signaux audio bicanaux artificiels.

4. Procédé selon l'une des revendications 1 à 3, **caractérisé en ce qu'**une fonction de traitement est un gain calculé en fonction de caractéristiques acoustiques du lieu de la station de conférence correspondante.

5. Procédé selon l'une des revendications 1 à 3, **caractérisé en ce qu'**une fonction de traitement est un filtre caractérisant l'ambiance du lieu de la station de conférence.

6. Procédé selon l'une des revendications 1 à 3, **caractérisé en ce qu'**une fonction de traitement est une fonction non-linéaire prenant en compte les variations intervenant au cours du temps sur le lieu de la station de conférence correspondante.

7. Pont de conférence d'un système de conférence comportant une pluralité de stations de conférence, une station de conférence correspondant à un site où elle est localisée, dans lequel le pont de conférence comporte:

   - des moyens de réception (310) de signaux audio bicanaux provenant des stations de conférence;
   - des moyens de détermination (320), par station de conférence du système de conférence, d'au moins une fonction de traitement adaptée à des caractéristiques du site de la station de conférence correspondante;
- des moyens d'application (320) des fonctions de traitements respectifs aux signaux bicanaux reçus des stations de conférence, le même traitement étant appliqué à chacun des signaux d'un signal audio bicanal d'une station de conférence; - des moyens de constitution (330) d'un signal bicanal hybride à transmettre par station de conférence par des moyens de sommation d'une partie des signaux audio bicanaux traités;
- des moyens de transmission (310) aux différentes stations de conférence du système de conférence du signal audio bicanal hybride respectif.

8. Pont de conférence selon la revendication 7, **caractérisé en ce qu'**il est inclus dans une station de conférence du système de conférence.

9. Programme d'ordinateur stocké dans une mémoire d'un pont de conférence et/ou stocké sur un support mémoire destiné à coopérer avec un lecteur du pont de conférence, comportant des instructions de code pour la mise en oeuvre des étapes du procédé selon l'une quelconques des revendications 1 à 6, lorsque le dit programme est exécuté par un processeur du pont de conférence.

**Patentansprüche**

1. Verfahren zur Übertragung einer räumlich angepassten Audioszene ausgehend von einer Konferenzbrücke in einem Konferenzsystem, das eine Vielzahl von Konferenzstationen aufweist, wobei eine Konferenzstation einem Standort entspricht, an dem sie sich befindet, wobei das Verfahren die folgenden Schritte aufweist, die von der Konferenzbrücke durchgeführt werden:

   - Empfang (E410) von Zweikanal-Audiosignalen, die von den Konferenzstationen kommen;
   - Bestimmung (E420), pro Konferenzstation des Konferenzsystems, mindestens einer Verarbeitungsfunktion, die an Merkmale des Standorts der entsprechenden Konferenzstation angepasst ist;
   - Anwendung (E430) der jeweiligen Verarbeitungsfunktionen an die von den Konferenzstationen empfangenen Zweikanalsignale, wobei die gleiche Verarbeitung an jedes der Signale eines Zweikanal-Audiosignals einer Konferenzstation angewendet wird;
   - Bildung (E440) eines pro Konferenzstation zu übertragenden hybriden Zweikanalsignals durch Summierung eines Teils der so verarbeiteten Zweikanal-Audiosignale;
   - Übertragung (E450) des jeweiligen hybriden Zweikanal-Audiosignals an die verschiedenen Konferenzstationen des Konferenzsystems.

2. Verfahren nach Anspruch 1, **dadurch gekennzeichnet, dass** die von den Konferenzstationen kommenden Zweikanal-Audiosignale mittels binauraler Mikrofone erfasst werden.

3. Verfahren nach einem der Ansprüche 1 bis 2, **dadurch gekennzeichnet, dass** die Zweikanal-Audiosignale eines Teils der Konferenzstationen künstliche Zweikanal-Audiosignale sind.

4. Verfahren nach einem der Ansprüche 1 bis 3, **dadurch gekennzeichnet, dass** eine Verarbeitungsfunktion eine abhängig von den akustischen Merkmalen des Orts der entsprechenden Konferenzstation berechnete Verstärkung ist.

5. Verfahren nach einem der Ansprüche 1 bis 3, **dadurch gekennzeichnet, dass** eine Verarbeitungsfunktion ein Filter ist, der die Umgebung des Orts der Konferenzstation kennzeichnet.

6. Verfahren nach einem der Ansprüche 1 bis 3, **dadurch gekennzeichnet, dass** eine Verarbeitungsfunktion eine nicht-lineare Funktion ist, die die Änderungen berücksichtigt, die im Lauf der Zeit am Ort der entsprechenden Konferenzstation auftreten.

7. Konferenzbrücke eines Konferenzsystems, das eine Vielzahl von Konferenzstationen aufweist, wobei eine Konferenzstation einem Standort entspricht, an dem sie sich befindet, wobei die Konferenzbrücke aufweist:

   - Einrichtungen zum Empfang (310) von Zweikanal-Audiosignalen, die von den Konferenzstationen kommen;
   - Einrichtungen zur Bestimmung (320), pro Konferenzstation des Konferenzsystems, mindestens einer Verarbeitungsfunktion, die an Merkmale des Standorts der entsprechenden Konferenzstation angepasst ist;

- Einrichtungen zur Anwendung (320) der jeweiligen Verarbeitungsfunktionen an die von den Konferenzstationen empfangenen Zweikanalsignale, wobei die gleiche Verarbeitung an jedes der Signale eines Zweikanal-Audiosignals einer Konferenzstation angewendet wird;
- Einrichtungen zur Bildung (330) eines pro Konferenzstation zu übertragenden hybriden Zweikanalsignals durch Summiereinrichtungen eines Teils der verarbeiteten Zweikanal-Audiosignale;
- Einrichtungen zur Übertragung (310) des jeweiligen hybriden Zweikanal-Audiosignals an die verschiedenen Konferenzstationen des Konferenzsystems.

8. Konferenzbrücke nach Anspruch 7, **dadurch gekennzeichnet, dass** sie in einer Konferenzstation des Konferenzsystems enthalten ist.

9. Computerprogramm, das in einem Speicher einer Konferenzbrücke gespeichert und/oder auf einem Speicherträger gespeichert ist, der dazu bestimmt ist, mit einem Lesegerät der Konferenzbrücke zusammenzuwirken, das Codeanweisungen zur Durchführung der Schritte des Verfahrens nach einem der Ansprüche 1 bis 6 aufweist, wenn das Programm von einem Prozessor der Konferenzbrücke ausgeführt wird.

**Claims**

1. Method for transmitting an audio scene spatialized on the basis of a conference bridge in a conference system comprising a plurality of conference stations, a conference station corresponding to a site where it is located, in which the method comprises the following steps implemented by the conference bridge:

- reception (E410) of dual-channel audio signals originating from the conference stations;
- determination (E420), per conference station of the conference system, of at least one processing function adapted to characteristics of the site of the corresponding conference station;
- application (E430) of the respective processing functions to the dual-channel signals received from the conference stations, the same processing being applied to each of the signals of a dual-channel audio signal of a conference station;
- construction (E440) of a hybrid dual-channel signal to be transmitted per conference station by summing some of the dual-channel audio signals thus processed;
- transmission (E450) to the various conference stations of the conference system of the respective hybrid dual-channel audio signal.

2. Method according to Claim 1, **characterized in that** the dual-channel audio signals originating from the conference stations are acquired by way of binaural microphones.

3. Method according to one of Claims 1 to 2, **characterized in that** the dual-channel audio signals of some of the conference stations are artificial dual-channel audio signals.

4. Method according to one of Claims 1 to 3, **characterized in that** a processing function is a gain calculated as a function of acoustic characteristics of the place of the corresponding conference station.

5. Method according to one of Claims 1 to 3, **characterized in that** a processing function is a filter characterizing the ambience of the place of the conference station.

6. Method according to one of Claims 1 to 3, **characterized in that** a processing function is a nonlinear function taking into account the variations occurring in the course of time at the place of the corresponding conference station.

7. Conference bridge of a conference system comprising a plurality of conference stations, a conference station corresponding to a site where it is located, in which the conference bridge comprises:

- reception means (310) for receiving dual-channel audio signals originating from the conference stations;
- determination means (320) for determining per conference station of the conference system at least one processing function adapted to characteristics of the site of the corresponding conference station;
- application means (320) for applying respective processing functions to the dual-channel signals received from the conference stations, the same processing being applied to each of the signals of a dual-channel audio signal of a conference station;

- construction means (330) for constructing a hybrid dual-channel signal to be transmitted per conference station by means for summing some of the processed dual-channel audio signals;
- transmission means (310) for transmitting to the various conference stations of the conference system the respective hybrid dual-channel audio signal.

8. Conference bridge according to Claim 7, **characterized in that** it is included in a conference station of the conference system.

9. Computer program stored in a memory of a conference bridge and/or stored on a memory medium intended to cooperate with a reader of the conference bridge, comprising code instructions for the implementation of the steps of the method according to any one of Claims 1 to 6, when said program is executed by a processor of the conference bridge.

**Fig.1**

**Fig.2**

**Fig.3**

Fig.4

**EP 2 009 891 B1**

## RÉFÉRENCES CITÉES DANS LA DESCRIPTION

### Documents brevets cités dans la description

- US 7012630 B
- US 20050018039 A
- US 6850496 B